# EUROPEAN PATENT APPLICATION

(11) **EP 4 770 023 A1**
(43) Date of publication of application: **01.07.2026**
(21) Application number: 25863870.9
(22) Date of filing: 25.07.2025
(51) Int. Cl.: H04L 12/40, H01M 10/42, H04L 25/08, H04L 25/03

(54) **BATTERY SYSTEM COMPRISING BATTERY MANAGEMENT DEVICE HAVING HIERARCHICAL STRUCTURE**

(30) Priority: 06.09.2024 KR 20240121265
(71) Applicant: LG Energy Solution, Ltd., Seoul 07335 (KR)
(72) Inventor: CHOI, Jaehoo, Daejeon 34122 (KR)
(74) Representative: Plasseraud IP
(86) International application number: PCT/KR2025/011045
(87) International publication number: WO 2026/054320

(57) **Abstract**

A battery system, according to one embodiment of the present invention, may comprise: an upper BMS; and a plurality of lower BMSs. Here, the upper BMS and the lower BMSs may be communicatively connected via a communication bus. In addition, each of the lower BMSs may be connected to a filter for reducing communication noise, and the upper BMS may be connected to a compensation circuit for compensating for attenuation of a communication signal caused by the filters.

## Description

### [Technical Field]

This application claims priority to and the benefit of Korean Patent Application No.10-2024-0121265 filed in the Korean Intellectual Property Office on September 6, 2024, the entire contents of which are incorporated herein by reference.

The present invention relates to a battery system, and more particularly, to a battery system including battery management apparatuses in a hierarchical structure.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be applied to a system in a form of an assembly such as a battery pack in which multiple battery cells are electrically connected or a battery rack in which battery packs are electrically connected according to system requirements. For an ESS for smart grids, a high-capacity battery system with a plurality of battery racks connected in parallel can be applied to satisfy required capacity of the system.

Typically, a battery rack may include a Battery Protection Unit (BPU) to protect the battery from abnormal currents and fault currents. The BPU may include a circuit breaker (CB) to forcibly disconnect the electrical connection between the battery rack and the DC link, and a Rack Battery Management System (RBMS) to monitor and manage battery packs.

For rack-level control, the RBMS may communicate with a Pack Battery Management System (PBMS) contained in each battery pack and collect state information from the PBMSs to diagnose abnormalities and perform charging/discharging control.

Typically, the RBMS and PBMS is communicatively connected via the Controller Area Network (CAN) bus, but however, this general communication connection structure may result in communication signal attenuation as the number of battery packs contained in a battery rack increase.

Among the related art documents relevant to the present invention, KR 10-2024-0064259 A is of some relevance.

### [Detailed Description of the Invention]

### [Technical Problem]

To obviate one or more problems of the related art, embodiments of the present disclosure provide a battery system including a compensation circuit for compensating for attenuation of a communication signal due to filters applied to each of lower battery management apparatuses (BMSs).

To obviate one or more problems of the related art, embodiments of the present disclosure also provide an upper battery management apparatus included in the battery system.

### [Technical Solution]

In order to achieve the objective of the present disclosure, a battery system may include an upper Battery management apparatus (BMS), and a plurality of lower BMSs. Here, the upper BMS and the plurality of lower BMSs may be communicatively connected via a communication bus. Furthermore, each of the plurality of lower BMSs may be connected to a filter configured to reduce communication noise and the upper BMS may be connected to a compensation circuit configured to compensate for attenuation of communication signal caused by filters connected to the plurality of lower BMSs.

The upper BMS and the plurality of lower BMSs may be communicatively connected via a Controller Area Network (CAN) bus.

The filter may be a resistor-capacitor (RC) filter connected to a communication line of the lower BMS.

The compensation circuit may be a circuit having a negative capacitance for offsetting the combined capacitance of the filters.

The compensation circuit may be connected to a communication line of the upper BMS.

The compensation circuit may be connected to a CAN HIGH line of the upper BMS and a CAN LOW line of the upper BMS, respectively.

The compensation circuit may include an operational amplifier, a first resistor, a second resistor, and a capacitor.

Here, a positive input terminal of the operational amplifier may be connected to the communication line of the lower BMS, the capacitor may be positioned between the positive input terminal and an output terminal of the operational amplifier, the first resistor may have one end grounded and the other end connected to a negative input terminal of the operational amplifier, and the second resistor may be positioned between the negative input terminal and the output terminal of the operational amplifier.

A resistance value of the first resistor, a resistance value of the second resistor, and a capacitance of the capacitor may be determined based on a number of filters and a capacitance of each filter.

The compensation circuit may be connected to a communication line of the upper BMS when new lower BMSs are additionally installed to the battery system.

When new lower BMSs are additionally installed in the battery system, a compensation circuit having a negative capacitance for reducing combined capacitance of the additionally installed lower BMSs to a predetermined range may be connected to a communication line of the upper BMS.

According to another embodiment of the present disclosure, a battery management apparatus may be connected to a plurality of lower-level battery management apparatuses via a communication bus and connected to a compensation circuit configured to compensate for attenuation of communication signal caused by filters for reducing communication noise connected to each of the plurality of lower-level battery management apparatuses.

The compensation circuit may be a circuit having a negative capacitance for offsetting the combined capacitance of resistor-capacitor (RC) filters connected to each communication line of the lower BMSs.

The compensation circuit may include an operational amplifier, a first resistor, a second resistor, and a capacitor.

### [Advantageous Effects]

According to embodiments of the present disclosure, the attenuation of communication signals due to filters applied to each of the lower BMSs can be minimized, thereby improving communication quality.

Furthermore, according to the above-described embodiments of the present invention, when additional battery assemblies (e.g., battery packs) are installed in a battery system, communication optimization is possible by adding a compensation circuit to the upper-level BMS or replacing or adjusting the existing compensation circuit without replacing the filters of the lower BMSs included in each battery assembly.

### [Brief Description of the Drawings]

FIG. 1 is a block diagram of a general energy storage system.
FIG. 2 illustrates a structure of a general battery rack.
FIG. 3 is a block diagram of a battery system according to embodiments of the present invention.
FIG. 4 is a block diagram of a battery system to which a compensation circuit according to embodiments of the present invention is applied.
FIG. 5 is a circuit diagram of the compensation circuit according to embodiments of the present invention.
FIG. 6 is a reference diagram for illustrating a battery system with a compensation circuit added during operation according to embodiments of the present invention.
FIG. 7 is a graph for illustrating the effects of applying the compensation circuit.

100: upper BMS
200: lower BMS
300: compensation circuit

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery module refers to an assembly in which a plurality of battery cells is electrically connected.

A battery rack may refer to a system of a single structure which is assembled by connecting modules set by a battery manufacturer in series/parallel and can be monitored and controlled by a battery management system (BMS). A battery rack may include several battery modules and a battery protection unit or any other protection device. Here, the battery module may also be referred to as a battery pack depending on a device or system in which the battery is used.

A battery bank refers to a group of large-scale battery rack systems configured by connecting a plurality of battery racks in parallel. A bank BMS for a battery bank may monitor and control several rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

A battery system controller (BSC) may refer to an apparatus that controls the topmost level of a battery system including a battery bank level structure and may also be used as a controller in a battery system with a multiple bank-level structure.

State of Charge (SOC) refers to a current state of charge of a battery, represented in percent points [%], and State of Health (SOH) refers to a current condition of a battery compared to its ideal or original conditions, represented in percent points [%].

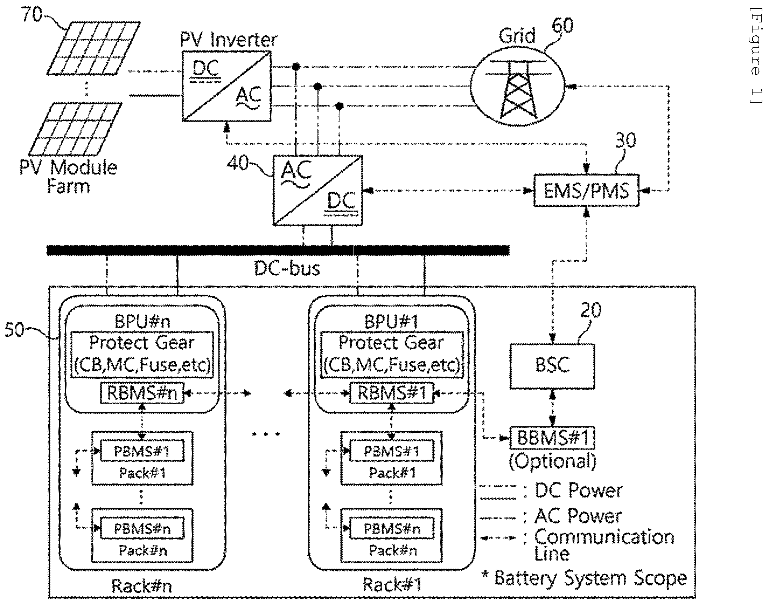

FIG. 1 is a block diagram of a general energy storage system.

Typically, a battery cell is a basic unit of battery for storing power in an energy storage system (ESS). A seris/parallel combination of battery cells may form a battery pack and a plurality of battery packs may form a battery rack. In other words, a battery rack as a series/parallel combination of battery packs may be a basic unit of a battery system. Here, a battery pack may be referred to as a battery module depending on a device or a system in which the battery is used.

Referring to FIG. 1, a battery rack may include a plurality of battery packs and a battery protection unit (BPU) 50 or protection device. A battery rack may be monitored and controlled through a rack battery management system (rack BMS). The RBMS may monitor a current, a voltage and a temperature of each battery rack to be managed, calculate a state Of charge (SOC) of the battery based on a monitoring result, and control charging and discharging.

Meanwhile, the BPU 50 is a device for protecting the battery from abnormal current and fault current in a battery rack. The BPU may include a main contactor MC, a fuse, a circuit breaker CB, or a disconnect switch DS. The BPU may control the battery system rack by rack by controlling the main contactor on/off according to control of the RBMS. The BPU may also protect the battery from short-circuit current by using a fuse when a short-circuit occurs. As such, a general battery system may be controlled through a protection device such as a BPU or a switch gear.

Meanwhile, a battery system controller (BSC) 20 may be installed to monitor and control objects such as a voltage, a current, a temperature, and a circuit breaker, in each battery section including a plurality of batteries, peripheral circuits, and devices. The battery system controller is a top-level controller of a bank-level battery system including a plurality of battery racks and is also used as a controller in a battery system with a multiple bank-level structure. Here, a bank-level battery system may each include a Bank BMS (BBMS), and the BBMS may monitor and control each rack by interfacing with the RBMSs of the battery racks to be managed.

Furthermore, a power conversion system (PCS) 40 installed in each battery section controls charging and discharging of the battery by controlling power supplied from an external source and power supplied from the battery section to the external, and may include a DC/AC inverter. Meanwhile, if the ESS system is interfacing with a photovoltaic (PV; solar power generation system) module farm 70, a PV inverter may be included.

Meanwhile, the output of each BPU may be connected to the PCS 40 which is connected to a power grid 60, through a DC bus. In addition, an energy management system (EMS) /power management system (PMS) 30 may control the energy storage system in overall.

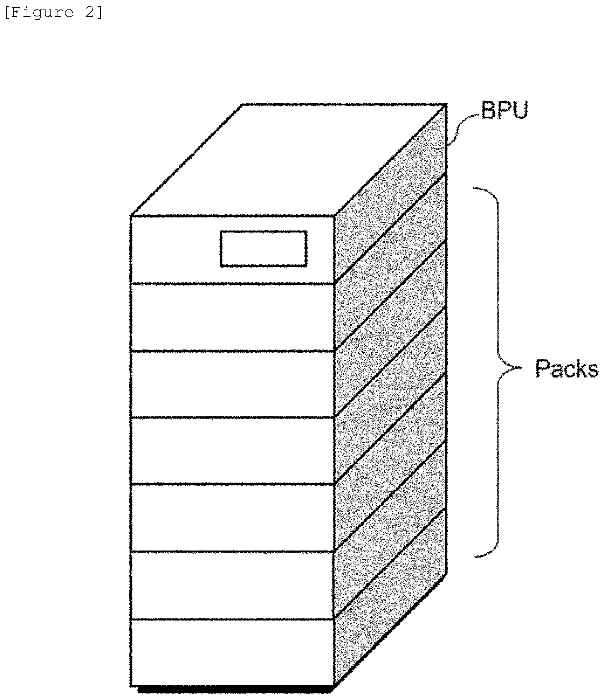

FIG. 2 illustrates a structure of a general battery rack.

The battery rack may include a battery protection unit (BPU) and a plurality of battery packs. Here, the BPU and the plurality of battery packs may be combined in a vertically stacked structure.

The BPU, located at the top of the battery rack, may include a circuit breaker (CB) and a rack BMS (RBMS).

The RBMS may include a main contactor MC, a fuse, a microcontroller unit (MCU), memory, a power supply unit, and a current sensor.

Each of the battery packs positioned below the BPU may include a plurality of batteries and a pack battery management system (PBMS) that monitors and manages the batteries.

The batteries within each battery pack may be electrically connected in series and/or parallel and connected to power terminals provided in the BPU, thereby connecting to a direct current (DC) link.

The PBMSs included in each battery pack may be communicatively connected with the RBMS located within the BPU. The RBMS may collect battery state data, such as voltage, current, and temperature, from the PBMSs of the battery packs to be managed, monitor and control each pack.

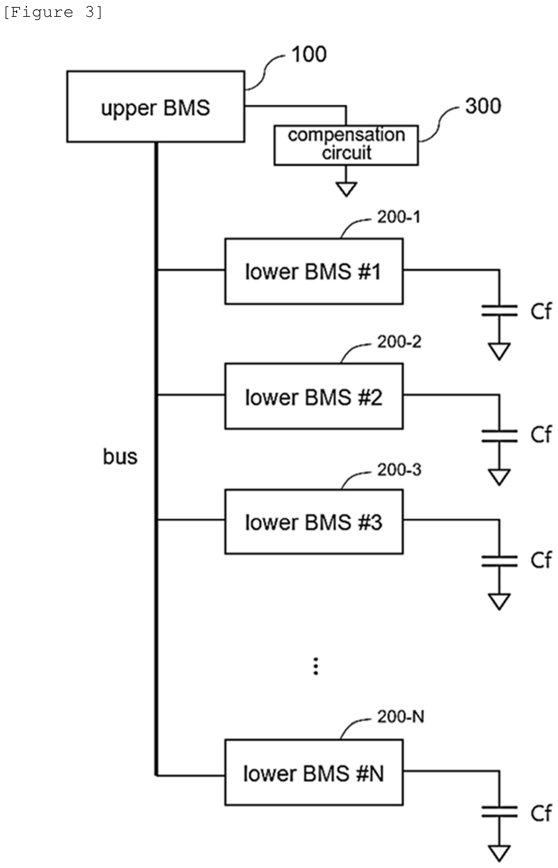

FIG. 3 is a block diagram of a battery system according to embodiments of the present invention.

Referring to FIG. 3, the battery system may include an upper battery management apparatus (BMS) 100 and a plurality of lower battery management apparatuses (BMSs) 200-1 to 200-n.

The upper BMS 100 may be connected with the plurality of lower BMSs 200-1 to 200-N, monitor and manage a battery assembly including the lower BMS 200. For example, the upper BMS may be a rack BMS (RBMS) and the lower BMS may be a pack BMS (PBMS). In another example, the upper BMS may be a bank BMS (BBMS) and the lower BMS may be a rack BMS (RBMS).

The upper BMS 100 may be connected to the lower BMSs 200-1 to 200-N via a communication bus. For example, the upper BMS 100 and the plurality of lower BMSs 200-1 to 200-N may communicate via a Controller Area Network (CAN) bus.

Each of the lower BMSs 200-1 to 200-N may be connected to, or include, a filter for reducing communication noise. Here, the filter may be an resistor-capacitor (RC) filter connected to a communication line of the lower BMS.

Generally, when a plurality of BMSs is connected in parallel to the CAN bus and communicate, communication occurs at a frequency in the 1 to 2 MHz range. Since various electronic devices other than the BMS are included within the battery system, significant noise may be generated in this frequency range. Thus, each lower BMS may be equipped with an RC filter to reduce this noise. Here, the RC filter may be connected to each of the CAN HIGH and CAN LOW lines of the lower BMS.

When the number of lower BMSs included in a battery system is small (i.e., the number of battery assemblies included in the battery system is small), the communication performance degradation caused by noise reduction filters is minimal. However, as the number of lower BMSs connected in parallel to the CAN bus increases, the combined capacitance (N x Cf) of capacitors (Cf) included in each noise reduction filter increases, potentially degrading the communication signal strength (Gain).

To address this issue, replacing the capacitors (Cf) included in each filter with new capacitors of appropriate capacitance may be considered, which however, is highly inefficient in terms of system design costs. Specifically, when designing a new battery system or adding battery assemblies to an existing battery system, capacitance optimization according to the communication frequency range is required, and thus, all filters included in the battery system needs to be replaced.

To address this technical issue, the battery system according to embodiments of the present invention may include a compensation circuit 300 to compensate for the attenuation of the communication signal caused by the filters of the lower BMS.

The compensation circuit 300 may be connected to a communication line of the upper BMS 100. Here, the compensation circuit 300 may be connected to each of the CAN HIGH line and the CAN LOW line of the upper BMS 100.

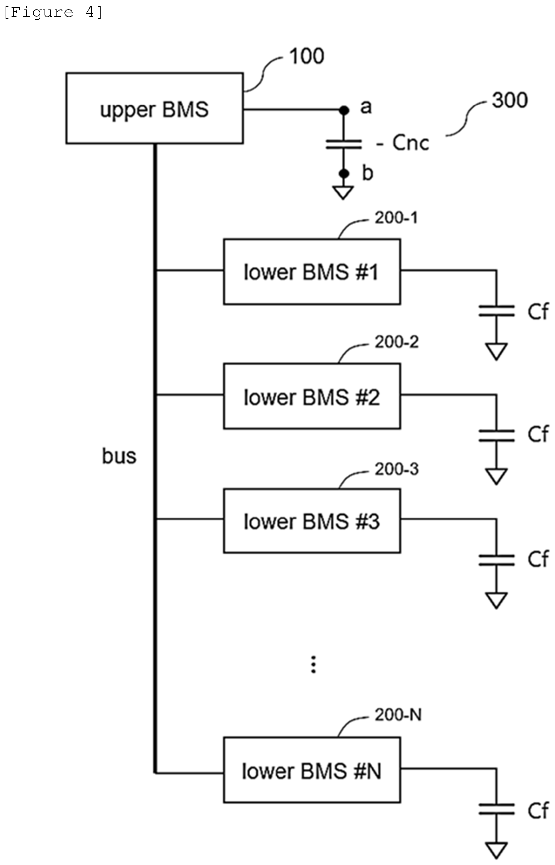

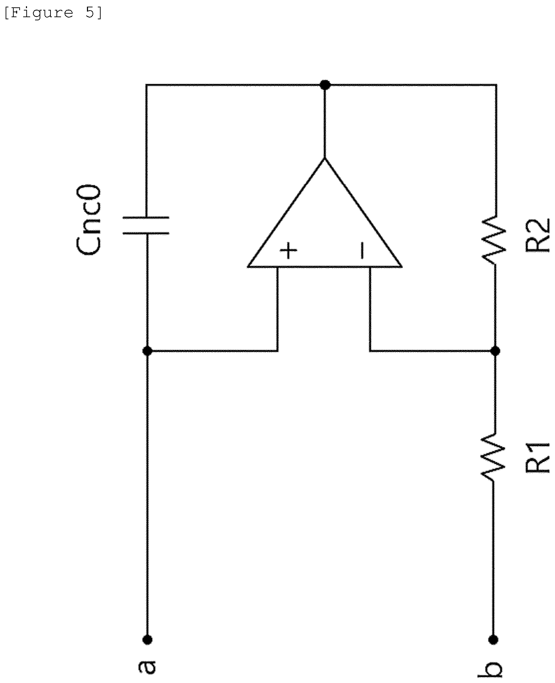

FIG. 4 is a block diagram of a battery system to which a compensation circuit according to embodiments of the present invention is applied and FIG. 5 is a circuit diagram of the compensation circuit according to embodiments of the present invention.

Referring to FIG. 4, the battery system may include an upper battery management apparatus (BMS) 100 and a plurality of lower battery management apparatuses (BMSs) 200-1 to 200-N.

The upper BMS 100 may monitor and manage a battery assembly including the lower BMSs 200 by interfacing with the plurality of lower BMSs 200-1 to 200-N.

The upper BMS 100 may be connected to the plurality of lower BMSs 200-1 to 200-N via a communication bus. Here, the upper BMS 100 and the plurality of lower BMSs 200-1 to 200-N may be connected to each other via a Controller Area Network (CAN) bus.

Each of the lower BMSs 200-1 to 200-N may be connected to a filter for reducing communication noise. Here, the filter may be an RC filter connected to each of the CAN HIGH and CAN LOW lines of the lower BMS.

The upper BMS 100 may be connected to a compensation circuit 300 to compensate for the attenuation of communication signal caused by the filters. Here, the compensation circuit 300 may be connected to each of the CAN HIGH and CAN LOW lines of the upper BMS 100.

The compensation circuit 300 may be a circuit having negative capacitance to offset the combined capacitance (N x Cf) of the filters.

The compensation circuit 300 according to embodiments of the present invention may be implemented as a negative capacitance circuit including an operational amplifier, a first resistor, a second resistor, and a capacitor.

For example, the compensation circuit 300 may include an operational amplifier (OP-Amp), a first resistor (R1), a second resistor (R1), and a capacitor (Cnc0), as illustrated in FIG. 5. Here, the positive input terminal (+) of the operational amplifier may be connected to the communication line (a in FIG. 4) of a lower BMS. In addition, the capacitor (Cnc0) may be positioned between the positive input terminal (+) and the output terminal of the operational amplifier. Furthermore, the first resistor (R1) may have one end grounded (b in FIG. 4) and the other end connected to the negative input terminal (-) of the operational amplifier. Furthermore, the second resistor (R2) may be placed between the negative input terminal (-) and the output terminal of the operational amplifier.

The capacitance of the compensation circuit 300 illustrated in FIG. 5 may be expressed as the product of the Miller gain of the operational amplifier and the feedback capacitance. In other words, the capacitance (-Cnc) of the compensation circuit 300 may have a value equal to the product (-Cnc0 X (R2/R1)) of the Miller gain (R2/R1) and the feedback capacitance (-Cnc0).

The resistance value (R1) of the first resistor, the resistance value (R2) of the second resistor, and the capacitance (Cnc0) of the capacitor, included in the compensation circuit 300, may be determined according to the number of filters included in the battery system (or the number of lower BMSs) and the capacitance (Cf) of each filter.

In more detail, since the compensation circuit 300 according to embodiments of the present invention is a configuration applied to the communication line of the upper BMS for offsetting the combined capacitance (N X Cf) of the filters, the capacitance (-Cnc) of the compensation circuit 300 may be designed to have a value capable of attenuating the combined capacitance (N X Cf) of the filters to an appropriate value.

The capacitance (-Cnc) of the compensation circuit 300 may be determined to be a value such that the gain of the communication signal at the communication frequency used in the battery system is greater than or equal to a determined value. Here, the capacitance (-Cnc) of the compensation circuit 300 may be determined to be a value such that the gain of the communication signal according to the overall combined capacitance (N X Cf - Cnc) is greater than or equal to -3dB. Thereafter, the resistance value (R1) of the first resistor, the resistance value (R2) of the second resistor, and the capacitance (Cnc0) of the capacitor may be determined so that the capacitance (-Cnc) of the compensation circuit 300 has the intended value, and thus, the compensation circuit 300 may be designed accordingly and applied to the communication line of the upper BMS 100.

For example, in FIG. 4, when Cf is 100pF and N is 21, the combined capacitance of the filters is 2100pF (21 X 100pF). Here, the combined capacitance of the filters may cause a signal strength attenuation of approximately -5dB at 2MHz. In order to adjust the signal strength attenuation to approximately -2dB, if the overall combined capacitance is to be compensated (adjusted) to 1300pF, a compensation circuit 300 having a capacitance of -800pF may be applied to the upper BMS 100. Here, a resistance of 100kΩ is applied to R1, a resistance of 400kΩ is applied to R2, and a capacitor of 200pF is applied to Cnc0, so that a compensation circuit 300 exhibiting the intended negative capacitance (-800 p) can be manufactured.

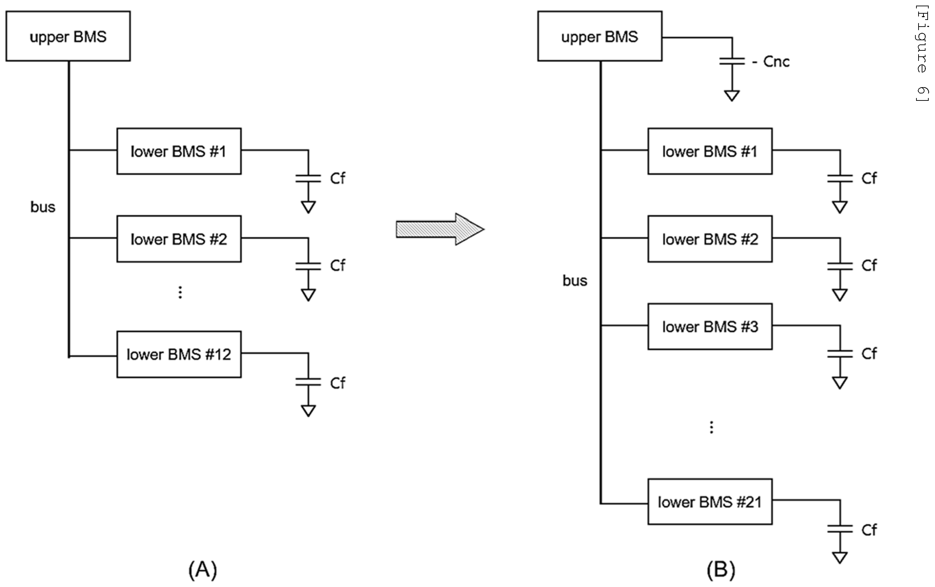

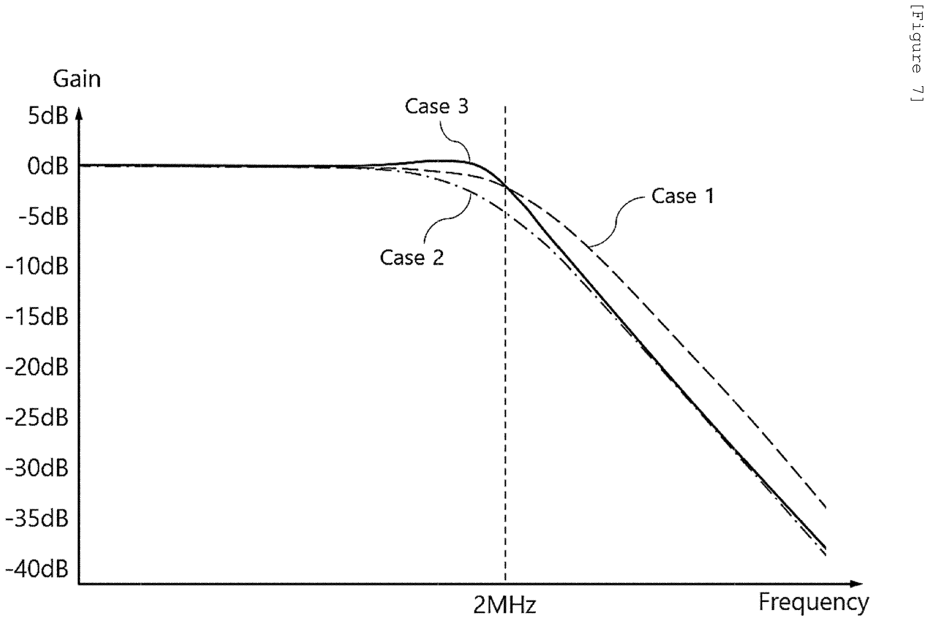

FIG. 6 is a reference diagram for illustrating a battery system with a compensation circuit added during operation according to embodiments of the present invention and FIG. 7 is a graph for illustrating the effects of applying the compensation circuit.

The compensation circuit may be added to the upper BMS during the operation process of the battery system, not during the design phase of the battery system.

For example, as illustrated in FIG. 6(A), a battery system includes 12 battery assemblies and noise reduction filters are applied to the lower BMSs (#1 to #12) included in each of the battery assemblies. In this battery system (Case 1), as illustrated in FIG. 7, the communication signal gain at 2MHz is approximately -2dB, allowing the battery system to operate without the compensation circuit applied to the upper BMS.

During the operation of the battery system, new battery assemblies may be additionally installed as needed. In this case, the noise reduction filters included in the added battery assemblies may increase the combined capacitance, thereby reducing the communication signal gain.

For example, as illustrated in FIG. 6(B), during the operation of a battery system including 12 battery assemblies, nine additional battery assemblies may be installed in the battery system. In this case (Case 2), the noise reduction filters included in the added battery assemblies increases the combined capacitance, and as illustrated in FIG. 7, the communication signal gain at 2MHz is attenuated to approximately -5dB, potentially degrading communication performance.

To prevent this degradation in communication performance, a compensation circuit may be connected to the communication line of the upper BMS. For example, as illustrated in FIG. 6(B), a compensation circuit with negative capacitance (-Cnc) may be connected to the communication line of the upper BMS in the battery system.

Here, the compensation circuit connected to the upper BMS may have a negative capacitance capable of attenuating the combined capacitance of the additionally installed lower BMSs within a predetermined range. For example, when nine lower BMSs are added as shown in Fig. 6(B) and the combined capacitance increases by 900pF (9 X 100pF), a compensation circuit 300 having a capacitance of -800pF may be applied to the upper BMS 100 so as to attenuate the increased combined capacitance to within 15%. In this case (Case 3), the total combined capacitance is reduced from 2100pF to 1300pF by the added compensation circuit, and as shown in Fig. 7, the communication signal gain at 2MHz is adjusted to about -2dB, so that communication performance can be improved.

In the forgoing, the present invention has been described with reference to the embodiments of the present invention, but those skilled in the art may appreciate that the present invention may be variously corrected and changed within the range without departing from the spirit and the area of the present invention described in the appending claims.

## Claims

1. A battery system comprising:
an upper battery management apparatus (BMS); and
a plurality of lower BMSs,
wherein the upper BMS and the plurality of lower BMSs are communicatively connected via a communication bus,
wherein each of the plurality of lower BMSs is connected to a filter configured to reduce communication noise, and
wherein the upper BMS is connected to a compensation circuit configured to compensate for attenuation of communication signal caused by filters connected to the plurality of lower BMSs.

2. The battery system of claim 1, wherein the upper BMS and the plurality of lower BMSs are communicatively connected via a Controller Area Network (CAN) bus.

3. The battery system of claim 1, wherein the filter is a resistor-capacitor (RC) filter connected to a communication line of the lower BMS.

4. The battery system of claim 3, wherein the compensation circuit is a circuit having a negative capacitance for offsetting combined capacitance of the filters.

5. The battery system of claim 4, wherein the compensation circuit is connected to a communication line of the upper BMS.

6. The battery system of claim 5, wherein the compensation circuit is connected to a CAN HIGH line of the upper BMS and a CAN LOW line of the upper BMS, respectively.

7. The battery system of claim 3, wherein the compensation circuit includes:
an operational amplifier, a first resistor, a second resistor, and a capacitor.

8. The battery system of claim 7, wherein:
a positive input terminal of the operational amplifier is connected to the communication line of the lower BMS,
the capacitor is positioned between the positive input terminal and an output terminal of the operational amplifier,
the first resistor has one end grounded and the other end connected to a negative input terminal of the operational amplifier, and
the second resistor is positioned between the negative input terminal and the output terminal of the operational amplifier.

9. The battery system of claim 7, wherein a resistance value of the first resistor, a resistance value of the second resistor, and a capacitance of the capacitor are determined based on a number of filters and a capacitance of each filter.

10. The battery system of claim 1, wherein the compensation circuit is connected to a communication line of the upper BMS when new lower BMSs are additionally installed to the battery system.

11. The battery system of claim 4, wherein, when new lower BMSs are additionally installed in the battery system, a compensation circuit having a negative capacitance for reducing combined capacitance of the additionally installed lower BMSs to a predetermined range is connected to a communication line of the upper BMS.

12. A battery management apparatus connected to a plurality of lower-level battery management apparatuses via a communication bus,
wherein the battery management apparatus is connected to a compensation circuit configured to compensate for attenuation of communication signal caused by filters for reducing communication noise connected to each of the plurality of lower-level battery management apparatuses.

13. The battery management apparatus of claim 12, wherein the compensation circuit is a circuit having a negative capacitance for offsetting combined capacitance of resistor-capacitor (RC) filters connected to each communication line of the lower BMSs.

14. The battery management apparatus of claim 13, wherein the compensation circuit includes:
an operational amplifier, a first resistor, a second resistor, and a capacitor.
